# EUROPEAN PATENT SPECIFICATION

(11) **EP 2 562 901 B1**
(45) Date of publication and mention of the grant of the patent: **19.03.2014**
(21) Application number: 11179010.1
(22) Date of filing: 26.08.2011
(51) Int. Cl.: H02J 3/00, G06Q 50/06

(54) **Unit commitment for wind power generation**
Einheitseinsatz für die Windenergieerzeugung
Engagement d'unité pour génération d'énergie éolienne

(43) Date of publication of application: 27.02.2013
(73) Proprietor: ABB Research Ltd., 8050 Zürich (CH)
(72) Inventor: Franke, Carsten, 5608 Stetten (CH); Beccuti, Giovanni, 8006 Zürich (CH)
(74) Representative: ABB Patent Attorneys

(56) References cited:
- PAPPALA V S ET AL: "A Stochastic Model for the Optimal Operation of a Wind-Thermal Power System", IEEE TRANSACTIONS ON POWER SYSTEMS, IEEE SERVICE CENTER, PISCATAWAY, NJ, US, vol. 24, no. 2, 1 May 2009 (2009-05-01), pages 940-950, XP011255152, ISSN: 0885-8950
- SHENGRONG BU ET AL: "Stochastic unit commitment in smart grid communications", COMPUTER COMMUNICATIONS WORKSHOPS (INFOCOM WKSHPS), 2011 IEEE CONFERENCE ON, IEEE, 10 April 2011 (2011-04-10), pages 307-312, XP031949929, DOI: 10.1109/INFCOMW.2011.5928828 ISBN: 978-1-4577-0249-5
- YONG YAN ET AL: "Generation scheduling with volatile wind power generation", SUSTAINABLE POWER GENERATION AND SUPPLY, 2009. SUPERGEN '09. INTERNATIONAL CONFERENCE ON, IEEE, PISCATAWAY, NJ, USA, 6 April 2009 (2009-04-06), pages 1-7, XP031640110, ISBN: 978-1-4244-4934-7
- FRANCOIS BOUFFARD ET AL: "Stochastic security for operations planning with significant wind power generation", POWER AND ENERGY SOCIETY GENERAL MEETING - CONVERSION AND DELIVERY OF ELECTRICAL ENERGY IN THE 21ST CENTURY, 2008 IEEE, IEEE, PISCATAWAY, NJ, USA, 20 July 2008 (2008-07-20), pages 1-11, XP031304095, ISBN: 978-1-4244-1905-0
- EMIL M CONSTANTINESCU ET AL: "A Computational Framework for Uncertainty Quantification and Stochastic Optimization in Unit Commitment With Wind Power Generation", IEEE TRANSACTIONS ON POWER SYSTEMS, IEEE SERVICE CENTER, PISCATAWAY, NJ, US, vol. 26, no. 1, 1 February 2011 (2011-02-01), pages 431-441, XP011343777, ISSN: 0885-8950, DOI: 10.1109/TPWRS.2010.2048133
- JUHA KIVILUOMA ET AL: "Impact of wind power on the unit commitment, operating reserves, and market design", POWER AND ENERGY SOCIETY GENERAL MEETING, 2011 IEEE, IEEE, 24 July 2011 (2011-07-24), pages 1-8, XP032055646, DOI: 10.1109/PES.2011.6039621 ISBN: 978-1-4577-1000-1

## Description

### FIELD OF THE INVENTION

The invention relates to the field of the control of electric power grids. In particular, the invention relates to a method for performing stochastic unit commitment for an electric power grid, to an energy management system, to a computer program and to a computer readable medium.

### BACKGROUND OF THE INVENTION

Unit commitment may be seen as the problem of finding an optimal operation state of the power generation units connected to an electric power grid for a certain load request on the electrical power grid. The optimal operation state may comprise decisions which power generation units should be on or off and the production level of the operating power generation units. The operation state of the power generation units may be optimal with respect to costs, CO2 production and the transmission capabilities of the electrical power grid.

The traditional approach for unit commitment focuses on determining the optimal settings and power dispatching of thermoelectrical plants given a certain load request. This amounts to solving a mixed integer nonlinear optimization problem, where the decision variables represent the unit settings and power production level, the constraints model the power demand, generation limitations (e.g. ramp up/shut down phase, minimum/maximum production constraints) and network limits. The objective function typically captures the associated production costs. The resulting optimization problem is completely deterministic. Full knowledge is assumed concerning system data.

More recent work has dealt with the introduction of renewable energy generation such as wind power generation units. In principle, the concept is the same. However, the main distinction is that the availability of wind power production is unknown to the extent that one must rely on the available wind forecast, which inherently features some degree of uncertainty typically described by uncertainty intervals around a predicted mean value. The resulting optimization problem is thus stochastic since power production is tied to probabilities.

In order to make informed decisions in the presence of uncertainties, risk management problems of power utilities may be modeled by multistage stochastic programs. These programs typically generate (through sampling) a set of scenarios/plausible realizations and corresponding probabilities to model the multivariate random data process (i.e. for the considered case the generation capability of wind power generation units). The number of scenarios needed to accurately represent the uncertainty involved is generally large.

Furthermore an individual set of scenarios is generated for each wind power generation unit. These predicted scenarios then need to be combined in many different ways in order to address the stochastic nature of the problem. If one considers that realistic unit commitment problems can feature tens or hundreds of units this leads to an exponentially complex scenario tree over which the optimization has to be performed. Because of the unavoidable computational and time limitations, scenario reduction techniques must then be utilized. Here, the goal is to reduce the number of scenarios that must be evaluated in order to fit the computational time restrictions for solving the unit commitment problem. On the other hand the resulting unit commitment problem must capture the probabilistic aspects of physical reality sufficiently well. Otherwise the execution of the unit commitment itself would be meaningless.

Techniques for reducing the number of scenarios have been applied for a variety of power management problems and also for wind power production, considering the intermittency of individual wind farms. These scenario reduction methods use different probability metrics to select the best set of scenarios. The scenario to be deleted is selected by comparing each scenario with the rest of the scenarios. Specifically, scenario reduction techniques typically eliminate scenarios with very low probability and aggregate close scenarios by measuring the distance between scenarios based on probability metrics.

The paper by PAPPALA V S ET AL: "A Stochastic Model for the Optimal Operation of a Wind-Thermal Power System", IEEE TRANSACTIONS ON POWER SYSTEMS, IEEE SERVICE CENTER, PISCATAWAY, NJ, US, vol. 24, no. 2, 2009, pages 940-950, discloses a unit commitment (UC) formulation that takes a stochastic nature of both wind generation and load into consideration by generating a huge number of scenarios using forecasted data. In order to keep a computational effort for solving the stochastic US problem within reasonable limits, the number of scenarios must be limited by appropriate scenario reduction technique. This is achieved by modelling the scenario reduction process as a special optimization problem, which is solved by a particle swarm optimization (PSO) approach. The actual UC problem is then solved by minimizing a cost function for operation of a plurality of thermal generating units that complement wind turbines in a power system. This is achieved by means of an adaptive particle swarm optimization (APSO) technique.

### DESCRIPTION OF THE INVENTION

An object of the invention is to reduce the computing time of unit commitment for an electric power grid comprising wind power generation units.

This object is achieved by the subject-matter of the independent claims. Further exemplary embodiments are evident from the dependent claims and the following description.

A first aspect of the invention relates to a method for performing stochastic unit commitment for an electric power grid with a first weather dependent power generation unit and a second weather dependent power generation unit and a number of loads.

According to an embodiment of the invention, the method comprises the steps of (a) Providing weather forecast data for the first and second power generation units, (b) Generating, for each of the first and the second power generation units, a plurality of scenarios indicative of future power production based on the weather forecast data, (c) Identifying, according to a correlation (or similarity) criterion, a pair of correlated scenarios (26a, 26b) comprising a first scenario (26a) for the first weather dependent power generation unit (14b) and a second scenario (26b) for the second weather dependent power generation unit (14c), and (d) Performing the stochastic unit commitment based on a single combined scenario representing the first and the second scenario of the pair of correlated scenarios (26a, 26b).

Rather than relying on the somewhat abstract procedure of generating scenarios through simulations and employing probability metrics to eliminate unlikely or redundant scenarios, the proposed embodiment exploits the fact that weather forecasts are not geographically independent but rather inherently interrelated in this respect, as physically intuitive.

For example, in case of co-located wind power generation units or wind farms (i.e. wind farms which are physically close), a set of plausible future wind scenarios is determined for one wind power generation unit and then a similar or at least related set of scenarios can be simultaneously derived for the other co-located wind power generation units, depending on their proximity to the first unit and on the related wind forecast.

Thus, the number of scenarios need not explode exponentially (or at least need not increase nearly as quickly) when one takes into account all weather dependent power generation units, since a large number of physically inconsistent scenarios may be inherently excluded from being enumerated. Consequently, the optimization method can be more efficiently performed over this intrinsically reduced number of scenarios, which may be furthermore built by definition to match the physical forecast.

A further aspect of the invention relates to an energy management system for forecasting, monitoring and/or controlling the power production of power generation units of an electrical power grid. For example, the energy management system may forecast and/or control the power production of convectional power production units and weather dependent power generation units.

According to an embodiment of the invention, the energy management system comprises weather dependent power generation units and is adapted to perform the method as described in the above and in the following. It has to be understood that features of the method as described in the above and in the following may be features of the system as described in the above and in the following.

A further aspect of the invention relates to a computer program for performing stochastic unit commitment for an electric power grid, which, when being executed by a processor, is adapted to carry out the steps of the method as described in the above and in the following. For example, the computer program may be run on equipment of the energy management system.

A further aspect of the invention relates to a computer-readable medium, in which such a computer program is stored. A computer-readable medium may be a floppy disk, a hard disk, an USB (Universal Serial Bus) storage device, a RAM (Random Access Memory), a ROM (Read Only memory) and an EPROM (Erasable Programmable Read Only Memory). A computer readable medium may also be a data communication network, e.g. the Internet, which allows downloading a program code.

These and other aspects of the invention will be apparent from and elucidated with reference to the embodiments described hereinafter.

### BRIEF DESCRIPTION OF THE DRAWINGS

The subject matter of the invention will be explained in more detail in the following text with reference to exemplary embodiments which are illustrated in the attached drawings.
Fig.1 schematically shows an electric power grid according to an embodiment of the invention.
Fig.2 shows a flow diagram for a method for performing stochastic unit commitment according to an embodiment of the invention.
Fig. 3 shows a diagram with a scenario tree according to an embodiment of the invention.
Fig. 4 shows a diagram with two scenario trees according to an embodiment of the invention.
Fig. 5 shows a diagram with two scenario trees according to an embodiment of the invention.

In principle, identical parts are provided with the same reference symbols in the figures.

### DETAILED DESCRIPTION OF EXEMPLARY EMBODIMENTS

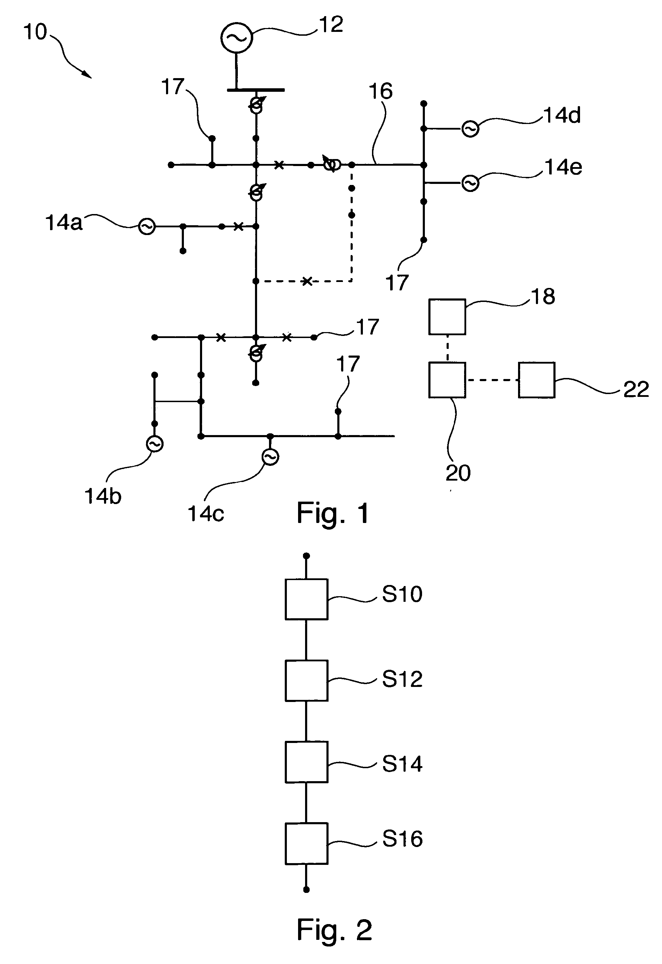

Fig.1 shows a simplified electric power grid 10 with a thermoelectric plant 12 and weather dependent power generation units 14a, 14b, 14c, 14d, 14e which may be wind power generation units, for example wind farms, or solar power generation units. The power generation units 12, 14a, 14b, 14c, 14d, 14e are interconnected via transmission lines 16 with electric loads 17.

According to an embodiment of the invention, the electrical power grid 10 comprises a conventional power production unit 12.

The weather dependent power generation unit 14a is not co-located with any other weather dependent power generation unit. For example, the distance to other weather dependent power generation units is more than 100 km. The weather dependent power generation units 14b and 14c are co-located similarly to wind farms 14d and 14e. For example, the weather dependent power generation units 14b, 14c (and the weather dependent power generation units 14d, 14e) are closer than 10 km.

A SCADA system 18 monitors the electric power grid 10 and provides data of the electric power grid, in particular the states of the transmission lines 16 and the power generation units 12, 14a, 14b, 14c, 14d, 14e, to an energy management system 20.

The energy management system 20 is also connected to a weather forecast provider 22. Based on the data from the SCADA system 18 and the weather forecast provider 22 the energy management system 20 performs a forecast for unit commitment as described with respect to Fig. 2.

The energy management system 20 may perform many applications focusing on different aspects of the operation of the electric power grid 10. For example, one of these applications is the contingency analysis that analyzes the impact of potential variations of system components to the overall system operation. The contingency analysis uses the actual system state and parameter forecasts as inputs, and analyzes a predefined set of possible contingencies. The outcome of this real-time analysis is the set of the most critical contingencies that could cause instabilities or overloads in the electrical power grid 10. In the case of wind power generation, the contingency analysis application may need to address variations in wind and the corresponding wind power variations must be addressed. Additionally, geographical information and correlations between the behaviours of closely located wind power plants have to be integrated into the contingency analysis application. The same applies, when solar power generation units, which power generation depend on the cloudiness, are connected to the electrical power grid 10.

Fig. 2 shows a method for performing stochastic unit commitment.

In step S10 weather forecast data for a geographic area, in which the power generation units 14a, 14b, 14c, 14d, 14e are located, is provided by the weather forecast provider 22 and retrieved in the energy management system 10. The weather forecast data may comprise local wind data (with the strength and the direction of the wind) and/or cloudiness data.

In step S12 a plurality (or an exhaustive set) of scenarios indicative of future power production is generated for the power generation units 14a, 14b, 14c, 14d, 14e in the energy management system 20 based on the weather forecast data.

According to an embodiment of the invention, at least one weather dependent power generation unit 14a, 14b, 14c, 14d, 14e is a wind power generation unit (a wind farm) and the weather forecast data comprises local wind forecast data. From this data the probabilistic behavior of the wind farm may be determined from the probabilities of different wind strengths.

According to an embodiment of the invention, at least one weather dependent power generation unit 14a, 14b, 14c, 14d, 14e is a solar power generation unit and the forecast data comprises cloudiness forecast data. For example, a solar power generation unit may comprise solar cells which power output is directly connected to the actual solar radiation.

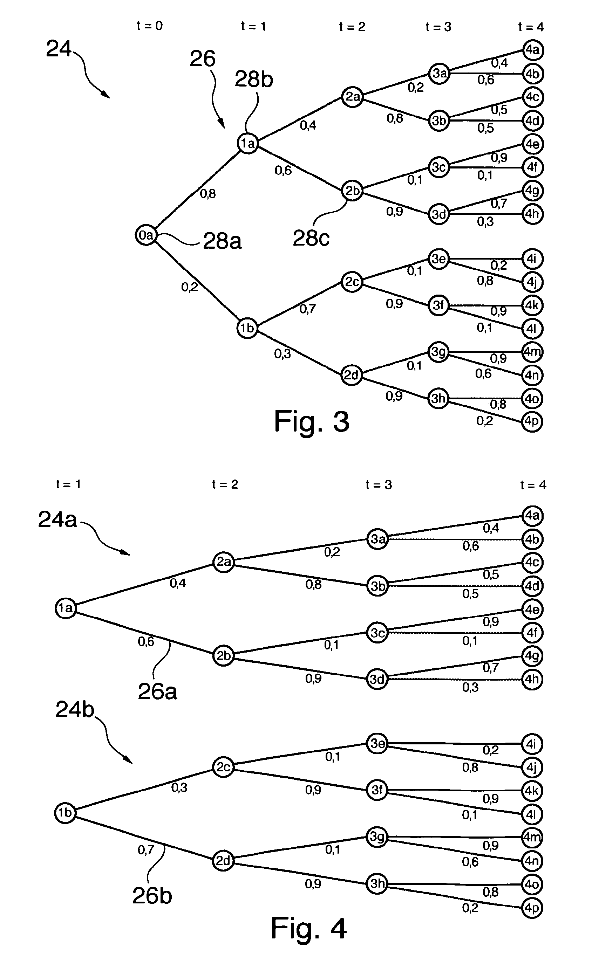

A scenario tree for a wind power generation unit 14a, 14b, 14c, 14d, 14e is described with respect to Fig. 3.

In step S14, the power management system 20 identifies pairs of similar scenarios according to a similarity criterion for meteorological related power generation units 14b, 14c (or 14d, 14e). Similarity criterions are described with respect to Fig. 4.

According to an embodiment of the invention, the method comprises the step of identifying, according to a correlation (similarity) criterion, a pair of correlated scenarios 26a, 26b comprising a first scenario 26a for the first weather dependent power generation unit 14b and a second scenario 26b for the second weather dependent power generation unit 14c.

In step S16, the power management system 20 performs a stochastic unit commitment for the identified pairs of similar scenarios. In this unit commitment process not only the weather dependent power generation units 14a, 14b, 14c, 14d, 14e are included but also the cconventional power production units 12.

According to an embodiment of the invention, the method comprises the step of performing the stochastic unit commitment based on a single combined scenario representing the first and the second scenario of the pair of correlated scenarios 26a, 26b. The combined scenario may feature (identical) probabilities of the original scenarios with summed absolute power.

According to an embodiment of the invention, the stochastic unit commitment comprises a unit commitment of the conventional power production unit 12. The stochastic unit commitment may also be performed with (a deterministic scenario for) the conventional power generation unit.

Summarized, the method may require the weather forecast for a given geographical area to be available at a central location (for example the energy management system) 20 responsible for the optimal commitment and dispatching of a set of power generation units 12, 14a, 14b, 14c, 14d, 14e. The method may be executed on the standard hardware equipment already available at such centres 20.

Fig. 3 shows a typical scenario tree 24 representing the possible power generation of an individual power generation unit 14a, 14b, 14c, 14d, 14e, for example a wind or solar power generation unit. Starting at time 0, it is predicted that at time 1 either a certain (larger) amount of power could be produced (denoted by 1a) or another (lower) given power level (denoted by 1b). The same concept is used for all subsequent points in time t, so that one obtains a scenario tree 24 of increasing complexity, reflecting the different probabilistic combinations of weather behaviour over time which result in different amounts of power being generated.

Different scenarios for one individual power generation unit may be derived from the scenario trio 24. In particular, a scenario 26 comprises subsequent forecast steps 28a, 28b, 28c that model a power generation forecast. Each of the forecast steps 28a, 28b, 28c is defined by a forecasted power (or a power interval), a forecasted time (or time interval) and a probability. For example, the forecast step 28b may indicate that with a probability of 0.8 the power generation unit (for example 14a) may generate a power between, for example 8 to 9 MW, in the time between t=1 and t=2.

According to an embodiment of the invention, a scenario comprises a number of subsequent forecast steps.

According to an embodiment of the invention, a forecast step comprises a forecasted power, a forecasted time and/or a probability.

At the time when the example scenario tree 24 is generated, the possible power generation by the power generation unit 14a, 14b, 14c, 14d, 14e can only be predicted. Thus, moving from one point in time to the next the likelihood of the new power generation must be re-evaluated. For example, the likelihood of change in power generation from one point in time to another reflects the presumably altered wind speed forecast and its associated uncertainty.

Later, when the power generation units 14a, 14b, 14c, 14d, 14e are operating, the real power generated can be evaluated. If the scenario trees 24 were appropriately and correctly formulated it is very likely that one of the predicted states for each point in time will be realized. For example, this may be the scenario 26. However, the sequence of steps 28a, 28b, 28c still has a probabilistic nature, so it need not match physical reality exactly.

Each of the power generation units 14a, 14b, 14c, 14d, 14e of Fig. 1 have their own power prediction scenario tree 24 as depicted in Fig. 3. However, the probabilities for moving from one power generation state to another might be different between the different power generation units 14a, 14b, 14c, 14d, 14e.

Without restricting to specific scenarios or to specific combinations of scenarios, the unit commitment problem must take into account all possible power generation transitions for all power generation units 14a, 14b, 14c, 14d, 14e and for each point in time t. Considering all possible combinations quickly leads to a problem which may be computationally intractable. However, due to the restriction to pairs or combinations of scenarios that are meteorological interrelated, this problem may be overcome.

Furthermore, the number of scenarios for a single power generation unit may be reduced before or after the identification of correlated pair of scenarios of different power generation units 14a, 14b, 14c, 14d, 14e.

According to an embodiment of the invention, the method comprises the steps of: De-selecting (prior or after step S14) scenarios that are unlikely to occur, according to a probability criterion and disregarding the deselected scenarios for the stochastic unit commitment. The probability criterion may be a threshold for an accumulated scenario probability.

To generate the forecast tree 24, a forecast horizon of up to 24 hours may be of interest, generally in steps of Ih. Current forecasting tools can provide a relatively accurate assessment and forecast of the production of power from a weather dependent power generation unit 14a, 14b, 14c, 14d, 14e for such a forecast horizon.

For example, one such forecasting tool uses a two stage procedure where a numerical weather prediction service is first used to obtain wind forecasts. Models of wind turbines and wind farms, and information about their physical characteristics, are then combined with the wind forecasts and used to create corresponding power generation forecasts with associated confidence intervals and/or estimates of the statistical distribution of the production of a function of forecasted time. Typical forecast inaccuracies in percent of rated power are 3-5% for large groups of wind turbines and up to 10% for individual wind power turbines. The wind power forecast usually only provides the predicted power generation by the specified wind generation component in terms of the expected power output and the upper and lower confidence intervals, i.e. forecast per wind farm, not per individual unit within the farm.

Fig. 4 shows two scenario trees 24a, 24b for two meteorologically close weather dependent power generation units 14a, 14c. The main principle to reduce the number of combined scenarios 26a, 26b that need to be evaluated during the unit commitment is based on an evaluation of the cases in which the weather dependent power generation units 14a, 14b are meteorologically interrelated. For example, the power generation units 14a, 14b may be wind farms that are likely to observe similar wind conditions or are solar power generation units that receive nearly the same amount of solar radiation.

According to an embodiment of the invention, pairs of similar scenarios 26a, 26b are identified for meteorologically close weather dependent power generation units 14a, 14b.

One possibility of being meteorologically close is that the power generation units 14a, 14b are co-located. In other words, the power generation units 14a, 14b may be neighbouring or may be closer than 10 km. In this case, the power generation units 14a, 14b may have locally correlated power production due to the local weather.

According to an embodiment of the invention, pairs of similar scenarios are identified for co-located weather dependent power generation units.

For example, if two power generation units 14b, 14c are co-located, the probability of having a similar "walk-through" for the related scenario trees 24a, 24b is very high. For example in the case of wind power generation, the wind farms 14b and 14c should reasonably observe similar wind conditions. Thus, assuming that wind farm 14b leads to the scenario 26a (1a-2b-3d-4h) then the walk-through of the scenario tree 24b for wind farm 14c will plausibly be similar to the scenario 26b (1b-2d-3h-4p). The same conclusions can be drawn for wind farms 14d and 14e, that is these latter power generation units 14d, 14e will behave in an alike fashion. On the basis of this it is possible to group together scenario trees 24a, 24b of co-located wind farms 14b, 14c and reduce the complexity of the overall unit commitment problem.

Note that in Fig. 3, the different probabilities may emanate from the fact that the two wind farms 14b, 14c rely on wind forecast from different providers 22.

In general, Fig. 3 shows scenario trees 24a, 24b of wind farms 14b, 14c with similar wind conditions in simplified form. Here, the two wind farms 14b, 14c are behaving identically over time. Of course, a real-life application will allow for small deviations.

Pairs of similar scenarios may be identified in the following way. For each two scenario trees 24a, 24b, a first scenario 26a may be picked from the first scenario tree 24a and a second scenario 26b may be picked from the second scenario tree 24b. The two scenarios 26a, 26b are then compared.

The two scenarios 26a, 26b may be similar, if (for example for each of their forecasting steps), the amount of relative forecasted power is comparable within 10-20%. The relative forecasted power may be a fraction of the maximum power of the respective power generation unit 14b, 14c.

According to an embodiment of the invention, the first scenario 26a and second scenario 26b may comprise a relative forecasted power. The first scenario 26a may be similar to the second scenario 26b, when the relative forecasted power of the first scenario 26a and the relative forecasted power of the second scenario 26b differ not more than 20%, for example not more than 10%.

In particular, scenarios 26a, 26b with forecast steps may be similar, if for each of the forecasting steps, the forecasted power at the forecasted time is similar, i.e. differs not more than the above given values.

Similarity may also be measured in terms of wind and/or weather conditions, for example wind speed, luminosity. In most cases this may map to power forceast but the generation capabilities might not depend linearly on the weather conditions. A similarity May also be measured in terms of likelyhood or probability of occurence.

According to an embodiment of the invention, a scenario 26a, 26b comprises a number of subsequent forecast steps 28a, 28b, 28c each having a forecasted power and probability, the method comprising the step of identifying the first scenario 26a and the second scenario as a pair of correlated scenarios 26a, 26b if a first sequence of forecasted probabilities of the first scenario and a second sequence of probabilities of the second scenario are identical or within a predefined band (for example the probability of the second sequence is within +/-10% of the first sequence) at each point in time for which the unit commitment is executed.

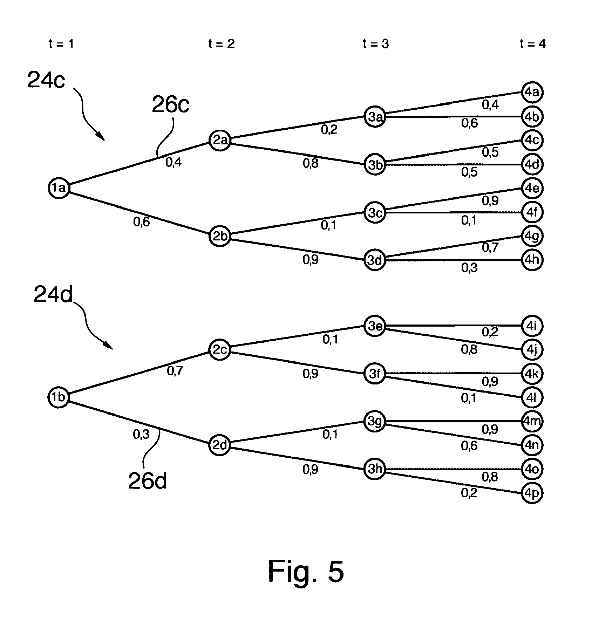

Fig. 5 shows scenario trees 24c, 24d for two wind farms (for example 14b and 14d) do not observe similar wind conditions. The generated power levels and the respective scenarios 26c, 26d will usually be totally unrelated and decoupled as shown in Fig. 5.

Alternatively or additionally to the embodiment with co-located power generation units, 14b, 14c which uses the local correlation of weather conditions, an embodiment with timely correlated weather conditions may be used. In this case, the wind directions of the weather forecast may be used to interrelate scenarios that are time delayed with respect to each other.

Using the example from Fig. 1, it may be possible that the wind blows from the direction of wind farms 14d, 14e in the direction to a wind farm 14a. Furthermore, the wind farms 14d, 14e and 14a may not be co-located but may also not be too far away from each other (for example less than 100 km). Then it may be assumed that a similar wind condition that was observed at the wind farms 14d, 14e will be observed at wind farm 14a after a certain time delay (which then depends on the wind strength and the wind direction). In other words, the power generation units 14d, 14e, 14e may have timely correlated power production due to the weather forecast. This may again significantly decrease the number of overall system scenarios 26a, 26b that need to be evaluated.

According to an embodiment of the invention, the weather forecast data comprises wind forecast data that may comprise local wind strength and local wind direction data. Pairs of similar scenarios may be identified for weather dependent power generation units that have correlated weather conditions based on the wind forecast data.

In this case, a first and second scenarios may be similar, if forecast steps of the first scenario that are time shifted by a specific wind dependent time delay are similar to forecasts steps of the second scenario.

According to an embodiment of the invention, the first and second sequences of forecasted probabilities of the first and second scenario are time-wise delayed (in accordance with a distance between the two power generation units and an inter-unit wind or cloud speed).

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

## Claims

1. A method of performing stochastic unit commitment for an electric power grid (10) including a first weather dependent power generation unit (14b), a second weather dependent power generation unit (14c), and a number of loads (17), comprising
a) Providing weather forecast data for the first and second power generation units,
b) Generating, for each of the first and the second power generation units, a plurality of scenarios (26) comprising a number of subsequent forecast steps (28a, 28b, 28c) each having a forecasted power and probability indicative of future power production based on the weather forecast data,
c) Identifying, according to a correlation criterion, a pair of correlated scenarios (26a, 26b) comprising a first scenario (26a) for the first weather dependent power generation unit (14b) and a second scenario (26b) for the second weather dependent power generation unit (14c) if a first sequence of forecasted probabilities of the first scenario (26a) and a second sequence of probabilities of the second scenario (26b) are identical or within a predefined band at each point in time for which the unit commitment is executed, or if a relative forecasted power of the first scenario (26a) and a relative forecasted power of the second scenario (26b) differ by not more than 20%,
d) Performing the stochastic unit commitment based on a single combined scenario representing the first and the second scenario of the pair of correlated scenarios (26a, 26b).

2. The method of claim 1, comprising
De-selecting, prior or after step c), scenarios, that are unlikely to occur, according to a probability criterion and
Disregarding the deselected scenarios for the stochastic unit commitment.

3. The method of claim 1, wherein the first and second sequence are time-wise delayed.

4. The method of one of claims 1 to 3,
wherein a weather dependent power generation unit (14a, 14b, 14c, 14d, 14e) is a wind power generation unit;
wherein the weather forecast data comprises local wind forecast data.

5. The method of one of claims 1 to 3,
wherein a weather dependent power generation unit (14a, 14b, 14c, 14d, 14e) is a solar power generation unit
wherein the forecast data comprises cloudiness forecast data.

6. The method of one of the preceding claims,
wherein the electrical power grid (10) comprises a conventional power production unit (12);
wherein the stochastic unit commitment comprises a unit commitment of the conventional power production unit (12).

7. A computer program for performing stochastic unit commitment for an electric power grid (10), which, when being executed by a processor, is adapted to carry out the steps of the method of one of claims 1 to 6.

8. A computer-readable medium, in which a computer program according to claim 7 is stored.

9. An energy management system (20) for forecasting, monitoring and/or controlling the power production of power generation units of an electrical power grid (10),
wherein the energy management system (20) comprises weather dependent power generation units (14a, 14b, 14c, 14d, 14e);
wherein the energy management system (20) is adapted to perform the method of one of the claims 1 to 6.

## Patentansprüche

1. Verfahren zum Ausführen eines stochastischen Einheiteneinsatzes für ein elektrisches Energieverteilungsnetz (10), das eine erste wetterabhängige Stromerzeugungseinheit (14b), eine zweite wetterabhängige Stromerzeugungseinheit (14c) und eine Anzahl von Verbrauchern (17) enthält, das Folgendes umfasst:
a) Bereitstellen von Wettervorhersagedaten für die erste und zweite Stromerzeugungseinheit,
b) Erzeugen einer Mehrzahl von Szenarien (26) sowohl für die erste als auch für die zweite Stromerzeugungseinheit, wobei die Szenarien eine Anzahl von aufeinanderfolgenden Vorhersageschritten (28a, 28b, 28c) umfassen, die jeder basierend auf den Wettervorhersagedaten eine vorhergesagte Leistung und Wahrscheinlichkeit besitzen, die indikativ für die zukünftige Stromproduktion sind,
c) Identifizieren eines Paares von korrelierten Szenarien (26a, 26b) nach einem Korrelationskriterium, wobei das Paar ein erstes Szenario (26a) für die erste wetterabhängige Stromerzeugungseinheit (14b) und ein zweites Szenario (26b) für die zweite wetterabhängige Stromerzeugungseinheit (14c) umfasst, wenn eine erste Sequenz von vorhergesagten Wahrscheinlichkeiten des ersten Szenarios (26a) und eine zweite Sequenz von vorhergesagten Wahrscheinlichkeiten des zweiten Szenarios (26b) zu jedem Zeitpunkt, an dem der Einheiteneinsatz ausgeführt wird, identisch oder innerhalb eines vordefinierten Bereichs sind, oder wenn eine relative vorhergesagte Leistung des ersten Szenarios (26a) und eine relative vorhergesagte Leistung des zweiten Szenarios (26b) sich um nicht mehr als 20% unterscheiden,
d) Ausführen des stochastischen Einheiteneinsatzes basierend auf einem einzelnen kombinierten Szenario, das das erste und das zweite Szenario des Paares von korrelierten Szenarien (26a, 26b) repräsentiert.

2. Verfahren nach Anspruch 1, das Folgendes umfasst:
Aussortieren von Szenarien, die unwahrscheinlich auftreten, vor oder nach dem Schritt c) nach einem Wahrscheinlichkeitskriterium und
Vernachlässigen der aussortierten Szenarien für den stochastischen Einheiteneinsatz.

3. Verfahren nach Anspruch 1, wobei die erste und die zweite Sequenz zeitversetzt sind.

4. Verfahren nach einem der Ansprüche 1 bis 3,
wobei eine wetterabhängige Stromerzeugungseinheit (14a, 14b, 14c, 14d, 14e) eine Windstromerzeugungseinheit ist;
wobei die Wettervorhersagedaten lokale Windvorhersagedaten umfassen.

5. Verfahren nach einem der Ansprüche 1 bis 3,
wobei eine wetterabhängige Stromerzeugungseinheit (14a, 14b, 14c, 14d, 14e) eine Solarstromerzeugungseinheit ist;
wobei die Wettervorhersagedaten Bewölkungsvorhersagedaten umfassen.

6. Verfahren nach einem der vorangegangenen Ansprüche,
wobei das elektrische Energieverteilungsnetz (10) eine konventionelle Stromerzeugungseinheit (12) umfasst;
wobei der stochastische Einheiteneinsatz einen Einheiteneinsatz der konventionellen Stromerzeugungseinheit (12) umfasst.

7. Computerprogramm zum Ausführen eines stochastischen Einheiteneinsatzes für ein elektrisches Energieverteilungsnetz (10), das, wenn es von einem Prozessor ausgeführt wird, dazu geeignet ist, die Schritte des Verfahrens nach einem der Ansprüche 1 bis 6 auszuführen.

8. Computerlesbares Medium, auf dem ein Computerprogramm nach Anspruch 7 gespeichert ist.

9. Energiemanagementsystem (20) zur Vorhersage, Überwachung und/oder Steuerung der Stromproduktion von Stromerzeugungseinheiten eines elektrischen Energieverteilungsnetzes (10),
wobei das Energiemanagementsystem (20) wetterabhängige Stromerzeugungseinheiten (14a, 14b, 14c, 14d, 14e) umfasst;
wobei das Energiemanagementsystem (20) dazu geeignet ist, das Verfahren nach einem der Ansprüche 1 bis 6 auszuführen.

## Revendications

1. Procédé pour mettre en oeuvre un engagement stochastique d'unités pour un réseau d'énergie électrique (10) comportant une première unité de production d'énergie dépendant des conditions météorologiques (14b), une deuxième unité de production d'énergie dépendant des conditions météorologiques (14c) et un certain nombre de charges (17), le procédé comprenant les étapes consistant à
a) mettre à disposition des données de prévision météorologique pour les première et deuxième unités de production d'énergie,
b) produire, pour chacune des première et deuxième unités de production d'énergie, une pluralité de scénarios (26) comprenant un certain nombre d'étapes de prévision consécutives (28a, 28b, 28c) comprenant chacune une énergie et une probabilité prévues indiquant une production d'énergie future sur la base des données de prévision météorologique,
c) identifier, selon un critère de corrélation, une paire de scénarios corrélés (26a, 26b) comprenant un premier scénario (26a) pour la première unité de production d'énergie dépendant des conditions météorologiques (14b) et un deuxième scénario (26b) pour la deuxième unité de production d'énergie dépendant des conditions météorologiques (14c) si une première séquence de probabilités prévues du premier scénario (26a) et une deuxième séquence de probabilités du deuxième scénario (26b) sont identiques ou s'inscrivent dans une bande prédéfinie à chaque instant pour lequel l'engagement d'unités est exécuté, ou si une énergie prévue relative du premier scénario (26a) et une énergie prévue relative du deuxième scénario (26b) ne diffèrent pas de plus de 20%,
d) mettre en oeuvre l'engagement stochastique d'unités sur la base d'un scénario combiné unique représentant les premier et deuxième scénarios de la paire des scénarios corrélés (26a, 26b).

2. Procédé selon la revendication 1, comprenant les étapes consistant à
désélectionner, avant ou après l'étape c), les scénarios ayant peu de chances de se produire selon un critère de probabilité, et
ne pas tenir compte des scénarios désélectionnés pour l'engagement stochastique d'unités.

3. Procédé selon la revendication 1, dans lequel les première et deuxième séquences sont retardées dans le temps.

4. Procédé selon l'une des revendications 1 à 3,
dans lequel une unité de production d'énergie dépendant des conditions météorologiques (14a, 14b, 14c, 14d, 14e) est une unité de génération d'énergie éolienne ;
dans lequel les données de prévision météorologique comprennent des données de prévision de vent local.

5. Procédé selon l'une des revendications 1 à 3,
dans lequel une unité de production d'énergie dépendant des conditions météorologiques (14a, 14b, 14c, 14d, 14e) est une unité de génération d'énergie solaire ;
dans lequel les données de prévision comprennent des données de prévision de nébulosité.

6. Procédé selon l'une des revendications précédentes,
dans lequel le réseau d'énergie électrique (10) comprend une unité de production d'énergie classique (12) ;
dans lequel l'engagement stochastique d'unités comprend un engagement d'unités de l'unité de production d'énergie classique (12).

7. Programme d'ordinateur pour mettre en oeuvre un engagement stochastique d'unités pour un réseau d'énergie électrique (10), qui, lors de son exécution par un processeur, est adapté à exécuter les étapes du procédé selon l'une des revendications 1 à 6.

8. Support exploitable par ordinateur, sur lequel est enregistré un programme d'ordinateur selon la revendication 7.

9. Système de gestion énergétique (20) pour prévoir, surveiller et/ou réguler la production d'énergie d'unités de production d'énergie d'un réseau d'énergie électrique (10),
lequel système de gestion énergétique (20) comprend des unités de production d'énergie dépendant des conditions météorologiques (14a, 14b, 14c, 14d, 14e) ;
lequel système de gestion énergétique (20) est adapté à mettre en oeuvre le procédé selon l'une des revendications 1 à 6.
